# FASCICULE DE BREVET EUROPEEN

(11) **EP 2 181 074 B1**
(45) Date de publication et mention de la délivrance du brevet: **03.04.2013**
(21) Numéro de dépôt: 08829145.5
(22) Date de dépôt: 28.08.2008
(51) Int. Cl.: C03C 3/078, C03C 3/083, C03C 3/085, C03C 3/087, C03C 4/08, C03C 13/00

(54) **NOUVELLES FIBRES DE VERRE RADIO-OPAQUES ET ELEMENT PROTHETIQUE DENTAIRE CONTENANT LESDITES FIBRES**
NEUE RÖNTGENDICHTE GLASFASERN UND ZAHNPROTHESENELEMENT MIT DIESEN FASERN
NOVEL RADIO-OPAQUE GLASS FIBRES AND DENTAL PROSTHETIC MEMBER CONTAINING SAID FIBRES

(30) Priorité: 28.08.2007 FR 0757212
(43) Date de publication de la demande: 05.05.2010
(73) Titulaire: Société de Recherches Techniques Dentaires - R.T.D., 38120 Saint Egrève (FR)
(72) Inventeur: BERTHEREAU, Anne, F-73190 Challes Les Eaux (FR); BLAIZOT, Jérôme, F-38000 Grenoble (FR)
(74) Mandataire: Denjean, Eric
(86) Numéro de dépôt international: PCT/FR2008/051536
(87) Numéro de publication internationale: WO 2009/030859

(56) Documents cités:
- EP-A- 0 500 325
- US-A1- 2005 209 086
- US-A1- 2007 042 172

## Description

La présente invention concerne des fils ou fibres de verres, ces fils étant susceptibles d'être produits par un procédé consistant à étirer mécaniquement des filets de verre fondu s'écoulant d'orifices disposés à la base d'une filière généralement chauffée par effet Joule.

Elle concerne plus particulièrement des fils de verre présentant des propriétés d'absorption des rayonnements ionisants en particulier les rayons X, grâce à leur composition nouvelle, particulièrement avantageuse.

Les nouvelles fibres de verre de l'invention trouvent une application particulièrement avantageuse dans le domaine dentaire, notamment comme fibres constitutives d'élément prothétique. Les éléments prothétiques au sens de l'invention recouvrent deux types de produits. Il s'agit tout d'abord des produits fabriqués par usinage de profilés ou de joncs constitués de fibres de verre noyées dans une matrice de résine, tels que notamment les tenons dentaires, les tenons intradentinaires, les renforts de bridges, ainsi que les préformes pour la CFAO. Il s'agit ensuite de fibres de verre tissées pour former une bandelette, laquelle est ensuite imprégnée d'une résine. Ces bandelettes connues dans le domaine dentaire sous l'expression anglaise « prepreg » servent également de renfort de bridge ou « splinting ». En pratique, la polymérisation de la résine imprégnant les prepregs est effectuée par le praticien ou le prothésiste par photopolymérisation.

L'invention est plus particulièrement décrite en relation avec les tenons dentaires en matériau composite bien que, comme déjà dit, elle puisse être appliquée à l'ensemble des éléments prothétiques listés ci-dessus.

Les tenons dentaires sont utilisés pour la reconstitution de dents dépulpées. On distingue deux types de tenons, respectivement les tenons métalliques ou céramiques et les tenons composites.

Les tenons métalliques sont en général réalisés en acier inoxydable. Ils ont pour principaux inconvénients d'être sujets à des phénomènes de corrosion. En outre, ils présentent un module d'élasticité transversal différent de celui de la dentine pour conduire, à terme, à une désolidarisation du tenon.

Pour résoudre ces problèmes, on a proposé des tenons fabriqués en matériau composite tels que ceux décrits notamment dans le document EP-A-0 432 001 du Demandeur. Ces tenons sont en pratique constitués de fibres longues unidirectionnelles de verre ou de carbone noyées dans une matrice de résine biocompatible. De manière générale, la proportion de fibres longues quelle que soit la matière choisie, représente de 40 à 80% en volume du tenon, le complément à 100 % étant occupé par la matrice.

L'inconvénient essentiel des tenons décrits dans ce document est qu'ils sont non radio-opaques aux rayons X, ce qui rend difficile leur localisation exacte au moment de leur mise en place mais également en cas d'ingestion accidentelle.

Pour résoudre le problème de la radio-opacité, on a proposé dans le document EP-A-0 793 474 d'incorporer dans la matrice des charges d'oxydes métalliques. Une liste des oxydes métalliques utilisables est mentionnée, dont le choix est effectué en fonction de leur indice de réfraction. Bien que les oxydes métalliques confèrent de la radio opacité au tenon, les oxydes forment parfois des agglomérats dans la matrice, augmentant ainsi sa viscosité et rendant difficile la fabrication du jonc. Par ailleurs, du fait que le tenon doive présenter une résistance mécanique élevée, il est nécessaire qu'il contienne un volume important de fibres de renfort (en pratique de 40 à 80%) diminuant ainsi le volume disponible pour les oxydes métalliques. Il s'ensuit que le niveau de radio opacité est forcément limité.

Le document EP-A-0 895 774 décrit des éléments de renfort pour la restauration dentaire dans lesquels les oxydes métalliques sont incorporés directement dans la fibre de verre. Parmi les fibres illustrées dans ce document, on connaît plus particulièrement la fibre dite AR, contenant en tant qu'oxyde métallique radio-opaque, de la zircone (ZrO₂) à une teneur comprise entre 1 et 20 % en poids. A la connaissance du Demandeur, il s'agit, à la date de dépôt de la présente demande, de la seule fibre utilisée en dentisterie pour ses propriétés de radio opacité. L'un des inconvénients de cette fibre est cependant sa résistance mécanique qui est moindre par rapport, par exemple, à celle de la fibre E également listée dans le document précité. Cette dernière n'étant pas radio-opaque n'est pas utilisée pour cette propriété. Un autre inconvénient de la fibre AR reste son niveau de radio-opacité qui n'est pas satisfaisant cliniquement. En particulier, selon le type de la racine de la dent à reconstituer, le tenon peut parfois être confondu avec la dentine sur la radiographie, notamment lorsque l'épaisseur de la paroi dentinaire est de 2 à 3 mm. Le diagnostic devient donc difficile en cas de réexamen de sa précédente intervention par le praticien. En revanche, le niveau de radio opacité est suffisant pour identifier l'ingestion accidentelle d'un tenon. Un autre inconvénient de la fibre AR réside dans son indice de réfraction élevé, de l'ordre de 1,56. Dès lors, pour obtenir un tenon translucide, il est nécessaire, comme indiqué dans le document WO-01/08590, d'augmenter en conséquence l'indice de réfraction de la matrice, ce qui limite nécessairement le choix de ses composants. Enfin, à une teneur supérieure à 20% en poids, il apparaît que l'oxyde de zirconium est difficilement miscible avec les autres oxydes présents dans les fibres de verre, rendant délicates les opérations de fibrage et plus généralement la fabrication de ces fibres.

Le problème que se propose de résoudre l'invention est donc de mettre au point des fibres alternatives aux fibres AR ainsi que leur procédé de fabrication, c'est-à-dire une composition verrière qui puisse être fibrée avec une marge de formage suffisante et dont les propriétés mécaniques, et de radio opacité soient ensembles, supérieures à celles des fibres AR.

On nomme « température au liquidus », notée « T_{liq} », la température à laquelle apparaît, dans un système à l'équilibre thermodynamique, le cristal le plus réfractaire. La température au liquidus donne donc la limite inférieure à laquelle il est possible de fibrer. La marge de formage est définie comme la différence entre la température à laquelle la viscosité du verre est de 1000 Poises (100 Pa..), température à laquelle le verre est généralement fibré, et la température au liquidus. Avantageusement, la marge de formage est supérieure à 50°C.

Le document US2007/0042172 décrit des compositions verrières destinées à être utilisées dans les batteries. La composition C-5 notamment décrit une composition dont la somme de Na₂O + K₂O + Li₂O est supérieure à 12 permettant de limiter la devitrification et de réduire la viscosité du verre. Toutefois, une teneur aussi élevée en oxydes alcalins confère à la fibre des propriétés hydrophiles pouvant entrainer des phénomènes d'infiltration d'eau dans le composite. En outre, la seule présence de ZrO₂ et ZnO n'est pas suffisante pour conférer à la fibre des propriétés de radio opacité.

Le document US2005/0209086 décrit une composition verrière utilisée pour la fabrication de tubes cathodiques. Là encore la forte proportion en Na₂O et K₂O confère à la fibre des propriétés hydrophiles pouvant entrainer, appliquée aux éléments prothétiques de l'invention, des phénomènes d'infiltration d'eau dans le composite, affectant, à terme, les propriétés mécaniques dudit l'élément prothétique.

Le Demandeur a réussi à mettre au point des nouvelles fibres, exemptes de ZrO₂ qui remplissent l'ensemble des objectifs propres aux éléments prothétiques dentaires que sont :
- la résistance mécanique,
- la radio opacité.

En d'autres termes, l'invention a pour objet un fil de verre comprenant une pluralité de filaments, dont la composition chimique comprend les constituants suivants dans les limites définies ci-après, exprimées en pourcentages pondéraux :

| | |
|---|---|
| SiO₂ | 40 à 60 |
| Al₂O₃ | 0 à 5 |
| CaO | 1 à 15 |
| MgO | 1 à 15 |
| BaO | 2 à 15 |
| SrO | 12 à 20 |
| ZnO | 0,5 à 10 |
| Na₂O + K₂O + Li₂O | 0 à 5 |
| TiO₂ | 3 à 20 |

La silice (SiO₂) est un oxyde formateur du réseau vitreux, et joue un rôle essentiel pour sa stabilité. Dans le cadre des limites définies précédemment, lorsque le pourcentage de ce constituant est inférieur à 40%, le verre obtenu n'est pas assez visqueux et dévitrifie trop facilement lors du fibrage. Pour des teneurs supérieures à 60%, le verre devient visqueux et plus difficile à fondre. De ce fait, la teneur en silice est de préférence comprise entre 48 et 55%.

L'alumine (Al₂O₃) constitue également un formateur du réseau des verres selon l'invention, mais est néanmoins préjudiciable aux propriétés de dévitrification. De ce fait, la teneur en alumine est de préférence comprise entre 3 et 4%.

La chaux (CaO) et la magnésie (MgO) permettent de régler la viscosité et de contrôler la dévitrification des verres selon l'invention. Ils ont un effet fondant particulièrement appréciable dans des compositions pauvres en oxydes alcalins. Dans le cadre des limites définies selon l'invention, une teneur en CaO supérieure ou égale à 15% engendre une augmentation des vitesses de dévitrification en CaSiO₃ (wollastonite) préjudiciable à un bon fibrage. La teneur en CaO est de préférence comprise entre 5 et 6%. La teneur en MgO est de préférence comprise entre 4 et 7%.

Les oxydes de baryum (BaO) et de strontium (SrO) sont essentiels car leur présence permet de résoudre les problèmes techniques à la base de la présente invention, et procurent en outre plusieurs avantages additionnels. Il a en effet été observé que la présence de BaO et de SrO permettait de conférer une forte absorption des rayonnements ionisants, en particulier des rayons X. La présence de ces deux oxydes est essentielle car il existe un effet de synergie entre eux, lequel permet d'obtenir une absorption des rayons X plus élevée lorsqu'un seul de ces oxydes est employé. Le baryum est un atome qui confère un coefficient massique d'absorption parmi les plus élevés possibles pour une énergie de 40 keV ou 60 keV, tandis que pour une énergie de 20 keV le strontium absorbe plus que le baryum et se trouve parmi les atomes les plus absorbants. La présence simultanée des deux atomes permet donc d'obtenir une forte absorption sur une large gamme d'énergies, en l'occurrence l'ensemble du spectre du rayonnement X (de 100 eV à 100 keV).

L'oxyde de strontium (SrO) présente en outre l'avantage d'augmenter la ténacité et le module de Young des fibres ainsi que d'améliorer la marge de formage du verre, facilitant ainsi le fibrage. L'oxyde de baryum présente toutefois l'inconvénient d'augmenter la densité du verre.

Pour ces différentes raisons, la teneur en BaO est de préférence supérieure ou égale à 5%, voire 6% et/ou inférieure ou égale à 10%. Elle est comprise en pratique entre 5 et 8%. La teneur en SrO est quant à elle de préférence supérieure ou égale à 9%, voire 10% et/ou inférieure ou égale à 17%. Elle est en pratique comprise entre 12 et 16%

Afin d'assurer une marge de formage la plus élevée possible, la somme des teneurs en CaO, MgO, BaO et SrO est de préférence supérieure ou égale à 23%, voire 25%, et même 27% ou 30%.

L'oxyde de zinc (ZnO) est essentiel dans le cadre des compositions selon l'invention car il permet d'augmenter très fortement la marge de formage. Des verres dépourvus d'oxyde de zinc présentent également une démixtion indésirable, se manifestant par un aspect opalescent. Il est également apparu que cet oxyde conférait des propriétés bactériostatiques, ce qui est particulièrement avantageux dans les applications odontologiques. La teneur en ZnO est donc de préférence supérieure ou égale à 1%, voire 2% et/ou inférieure ou égale à 6%. Elle est en pratique comprise entre 2 et 5%.

Les oxydes alcalins (Li₂O, Na₂O, K₂O) peuvent être introduits dans les compositions des fils de verre selon l'invention pour limiter la dévitrification et réduire la viscosité du verre. La teneur en oxydes alcalins doit cependant rester inférieure ou égale à 5% pour éviter une diminution pénalisante de la résistance hydrolytique du verre et de la marge de formage. La teneur en Na₂O est de préférence supérieure ou égale à 1%. En pratique, la teneur Na₂O + K₂O + Li₂O est comprise entre 1.5 et 2%.

L'oxyde de titane (TiO₂) est un composant essentiel de la composition selon l'invention. Il permet en particulier d'améliorer la résistance mécanique et la résistance à la corrosion, aussi bien en milieu acide que basique. L'absorption ultraviolette due aux fortes teneurs en titane peut toutefois être rédhibitoire lorsque les fibres sont destinées au renfort de polymères dont la réticulation est réalisée au moyen de rayonnements UV. En outre, l'oxyde de titane a tendance à conférer une couleur jaune à la fibre, ce qui constitue un inconvénient pour les applications dentaires objet de la demande. Pour ces différentes raisons, la teneur en oxyde de titane des verres selon l'invention est de préférence inférieure à 12%. Elle est en pratique comprise entre 5 et 10%.

Un ou plusieurs autres composants peuvent également être présents, généralement à titre d'impuretés, dans la composition chimique des fils selon l'invention, la teneur totale en ces autres composants restant généralement inférieure ou égale à 5%, de préférence inférieure à 3%, voire 2%, le taux de chacun de ces autres composants n'excédant pas généralement 2% ou 1%. Il peut s'agir en particulier d'agents employés pour affiner le verre (éliminer les inclusions gazeuses) tels que le soufre, l'arsenic, des halogènes comme le chlore ou encore l'oxyde de cérium, ou de composés provenant de la dissolution dans le verre de petites quantités de matériaux utilisés comme réfractaires dans le four de fusion du verre. Ces différentes impuretés ne modifient pas la manière dont les fils de verre décrits précédemment résolvent le problème technique à la base de l'invention. Il peut également s'agir de composés comme par exemple MnO, F, U₂O, Fe₂O₃, B₂O₃, ZrO2 dont la quantité n'excède pas 0.1% en poids de la composition.

La teneur en oxyde de manganèse (MnO ou MnO₂ est de préférence inférieure ou égale à 1%, et de préférence inférieure ou égale à 0,3%. Cet oxyde étant susceptible de conférer au verre une coloration violette très intense, le taux de MnO est maintenu de préférence inférieur ou égal à 0,1%, voire 0,05% et même 0,01%.

Du fluor (F ou F₂) peut être ajouté en faible quantité pour améliorer la fusion du verre, ou être présent à l'état d'impureté. Pour des raisons liées à la protection de l'environnement, la teneur en fluor est avantageusement maintenue en-dessous de 1%, voire 0,5%, et notamment inférieure à 0,1%.

L'oxyde de fer est une impureté inévitable des verres selon l'invention du fait de sa présence dans plusieurs matières premières, et sa teneur est généralement inférieure à 0,5%. Etant donné que l'effet de coloration généralement attribué au titane est en fait dû à un transfert électronique entre les ions Fe²⁺ et Ti⁴⁺, la teneur en fer dans les verres selon l'invention est avantageusement inférieure à 0,3%, notamment à 0,2%, grâce à un choix judicieux des matières premières.

L'oxyde de bore ou anhydride borique (B₂O₃) peut être présent dans la composition selon l'invention, généralement à des teneurs inférieures ou égales à 3%, de préférence 1%. Le fil de verre selon l'invention ne contient de préférence pas de B₂O₃.

De préférence, la somme des teneurs en fluor, oxyde de bore et oxyde de lithium (F + B₂O₃ + Li₂O) est inférieure ou égale à 2%, voire 1 %.

Les fils de verre selon l'invention sont généralement obtenus à partir des verres de composition précédemment décrite selon le procédé suivant : une multiplicité de filets de verre fondu, s'écoulant d'une multiplicité d'orifices dispersés à la base d'une ou plusieurs filières est étirée sous la forme d'une ou plusieurs nappes de filaments continus, puis rassemblée en un ou plusieurs fils collectés sur un support en mouvement. Il peut s'agir d'un support en rotation lorsque les fils sont collectés sous forme d'enroulements ou d'un support en translation lorsque les fils sont coupés par un organe servant également à les étirer ou lorsque les fils sont projetés par un organe servant à les étirer de façon à former un mat.

Les fils obtenus, éventuellement après d'autres opérations de transformation, peuvent ainsi se présenter sous différentes formes : fils continus, fils coupés ou broyés, tresses, rubans, mats, réseaux..., ces fils étant composés de filaments de diamètre pouvant aller de 5 à 30 microns environ.

Le verre fondu alimentant les filières est obtenu à partir de matières premières éventuellement pures (par exemple issues de l'industrie chimique) mais le plus souvent naturelles, ces dernières comprenant parfois des impuretés à l'état de traces, ces matières premières étant mélangées dans des proportions appropriées pour obtenir la composition désirée, puis étant fondues. La température du verre fondu (et donc sa viscosité) est réglée de façon traditionnelle par l'opérateur de façon à permettre le fibrage du verre en évitant notamment les problèmes de dévitrification et de façon à obtenir la meilleure qualité possible des fils de verre. Avant leur rassemblement sous forme de fils, les filaments sont généralement revêtus d'une composition d'ensimage permettant de les protéger de l'abrasion et facilitant leur association ultérieure avec des matières à renforcer.

Comme déjà dit, les fils de verre de l'invention sont destinés à constituer des fibres de renfort de divers éléments prothétiques qui sont soit fabriqués à partir de joncs constitués de fibres de verre noyées dans une matrice de résine, soit fabriqués à partir de fibres de verre imprégnées d'une matrice polymérisable uniquement au moment de l'intervention par le praticien.

Dans le premier cas, il s'agit notamment de tenons dentaires, de tenons intra dentinaires, de renforts de bridges ou encore de préformes de CFAO. Dans cette hypothèse, le taux de fibres de verre représente entre 50 et 70 % en volume, avantageusement entre 60 et 68% en volume de l'élément prothétique.

Les fibres de verre imprégnées de résine polymérisable désignées également « prepreg » sont, quant à elles, tissées avant d'être imprégnées pour constituer des renforts de bridges désignés en anglais « splinting. »

Les procédés de fabrication de ces différents éléments prothétiques sont parfaitement connus par l'homme du métier et ne nécessitent pas en conséquence d'être décrits en détail de même que le choix des résines. S'agissant plus particulièrement des tenons, on rappelle simplement que ceux-ci peuvent être fabriqués notamment par pultrusion.

Les avantages présentés par les fils de verre selon l'invention seront mieux appréciés à travers l'exemple suivant, illustrant la présente invention sans toutefois la limiter.

### Exemple 1

Le tableau 1 rassemble des exemples selon l'invention.
La composition des verres est exprimée en pourcentage massique d'oxydes, issu de l'analyse. Elle peut en outre contenir quelques impuretés dont la teneur est inférieure à 0.1%.

Afin d'illustrer les avantages des compositions de verre selon l'invention, le tableau présente trois propriétés fondamentales :
- la température correspondant à une viscosité de 103 poises (102 Pa.s), notée « T3 », mesurée selon la norme ISO 7884-2 et exprimée en degrés Celsius, proches de la température du verre dans la filière,
- la marge de formage ou différence entre la température « T3 » et la température au liquidus, notée « delta T » et exprimée en degrés Celsius,

**Tableau 1**

| Ex | 1 | 2 | 3 | 4 | 5 |
|---|---|---|---|---|---|
| SiO₂ | 54.5 | 48,7 | 53,0 | 50,8 | 53.8 |
| BaO | 6,5 | 6.0 | 6.0 | 7.0 | 6.0 |
| SrO | 13,0 | 14,0 | 13,0 | 13,0 | 12,0 |
| ZnO | 3.0 | 4.0 | 4.0 | 3.0 | 2.0 |
| Al₂O₃ | 3,7 | 3.7 | 3.7 | 3.7 | 3.7 |
| CaO | 5.4 | 5.4 | 5,4 | 6.0 | 6.0 |
| MgO | 5,4 | 6,7 | 5,4 | 6.0 | 7,0 |
| TiO₂ | 7.0 | 9.7 | 8.0 | 9.0 | 8.0 |
| Na₂O | 1.2 | 1.2 | 1,2 | 1.2 | 1.2 |
| K₂O | 0,5 | 0,5 | 0,5 | 0,5 | 0.5 |
| T3(°C) | 1185 | 1150 | 1165 | 1180 | 1180 |
| T liquidus (°C) | 1120 | 1100 | 1120 | 1125 | 1113 |
| Marge de formage (en °C) | 65 | 50 | 45 | 55 | 67 |

### Exemple 2

Cet exemple vise à comparer la radio opacité d'un jonc contenant des fibres AR avec celle d'un jonc contenant des fibres de l'invention pour des volumes variables de fibres. Composition de la fibre de l'invention en pourcentage pondéral:

| | Cible |
|---|---|
| Na₂O | 1 |
| MgO | 5,4 |
| Al₂O₃ | 3.7 |
| SiO₂ | 53 |
| K₂O | 0,5 |
| CaO | 5.4 |
| TiO₂ | 8 |
| ZnO | 4 |
| SrO | 13 |
| BaO | 6 |

- Jonc AR : jonc contenant 64 % vol de fibres AR
- Jonc I : jonc contenant 64% vol de fibres de l'invention
- Jonc II : jonc contenant 66% vol de fibres de l'invention
- Jonc III : jonc contenant 69% vol de fibres de l'invention

Une valeur de 100% de radio opacité a été attribuée à la fibre AR.

| Radio-opacité ramené à 100% | Ech 1 | Ech 2 | Ech 3 | Ech 4 | Moyenne |
|---|---|---|---|---|---|
| Jonc AR | 100 | 100 | 100 | 100 | 100% |
| Jonc | 129 | 126 | 143 | 146 | 136% |
| Jonc II | 132 | 134 | 146 | 149 | 140% |
| Jonc III | 139 | 131 | 152 | 156 | 145% |

Comme le montre le tableau ci-dessus, on obtient une augmentation de la radio opacité de 36% en moyenne à 45% avec les fibres de l'invention en fonction du volume de fibres.

## Revendications

1. Fil de verre apte à renforcer des matières polymériques et comprenant une pluralité de filaments, dont la composition chimique comprend les constituants suivants dans les limites définies ci-après exprimées en pourcentages pondéraux :
| | |
|---|---|
| SiO₂ | 40 à 60 |
| Al₂O₃ | 0 à 5 |
| CaO | 1 à 15 |
| MgO | 1 à 15 |
| BaO | 2 à 15 |
| SrO | 12 à 20 |
| ZnO | 0,5 à 10 |
| Na₂O + K₂O + Li₂O | 0 à 5 |
| TiO₂ | 3 à 20 |

2. Fil de verre selon la revendication 1, tel que la teneur en SiO₂ est comprise entre 48 et 55%.

3. Fil de verre selon la revendication 1 ou 2, tel que la teneur en CaO est comprise entre 5 et 6%.

4. Fil de verre selon l'une des revendications précédentes, tel que la teneur en MgO est comprise entre 4 et 7%.

5. Fil de verre selon l'une des revendications précédentes, tel que la teneur en BaO est comprise entre 5 et 8%.

6. Fil de verre selon l'une des revendications précédentes, tel que la teneur en SrO est comprise entre 12 et 16%.

7. Fil de verre selon l'une des revendications précédentes, tel que la somme des teneurs en CaO, MgO, BaO et SrO est supérieure ou égale à 23%.

8. Fil de verre selon l'une des revendications précédentes, tel que la teneur en ZnO est comprise entre 2 et 5%.

9. Fil de verre selon l'une des revendications précédentes, tel que la teneur en TiO₂ est comprise entre 5 et 10%.

10. Elément prothétique dentaire constitué d'un matériau composite comprenant les fils de verre objet de l'une des revendications 1 à 9, noyés dans une résine.

11. Elément prothétique selon la revendication 10, **caractérisé en ce qu'**il s'agit de tenons dentaires, de tenons intra dentinaires, de renforts de bridges ou de préformes de CFAO.

12. Elément prothétique selon la revendication 10, **caractérisé en ce que** les fils de verre représentent entre 50 et 70% en volume dudit élément prothétique.

## Claims

1. Glass thread adapted for reinforcing polymeric materials and comprising a plurality of filaments having a chemical composition that comprises the following constituents within the limits defined below in weight percent:
| | |
|---|---|
| SiO₂ | 40 to 60 |
| Al₂O₃ | 0 to 5 |
| CaO | 1 to 15 |
| MgO | 1 to 15 |
| BaO | 2 to 15 |
| SrO | 12 to 20 |
| ZnO | 0.5 to 10 |
| Na₂O + K₂O + Li₂O | 0 to 5 |
| TiO₂ | 3 to 20 |

2. Glass thread as claimed in claim 1, wherein the SiO₂ content is between 48 and 55%.

3. Glass thread as claimed in claim 1 or 2, wherein the CaO content is between 5 and 6%.

4. Glass thread as claimed in any of the previous claims, wherein the MgO content is between 4 and 7%.

5. Glass thread as claimed in any of the previous claims, wherein the BaO content is between 5 and 8%.

6. Glass thread as claimed in any of the previous claims, wherein the SrO content is between 12 and 16%.

7. Glass thread as claimed in any of the previous claims, wherein the sum of the CaO, MgO, BaO and SrO contents is greater than or equal to 23%.

8. Glass thread as claimed in any of the previous claims, wherein the ZnO content is between 2 and 5%.

9. Glass thread as claimed in any of the previous claims, wherein the TiO₂ content is between 5 and 10%.

10. Dental prosthetic member made of a composite material comprising the glass threads as claimed in any of claims 1 to 9, embedded in a resin.

11. Prosthetic member as claimed in claim 10, **characterised in that** it concerns dental pegs, intradentinal pegs, bridge reinforcements or CAD/CAM preforms.

12. Prosthetic member as claimed in claim 10, **characterised in that** the glass threads represent between 50 and 70% by volume of said prosthetic member.

## Patentansprüche

1. Glasfaser, die zum Verstärken von Polymermaterialien geeignet ist und mehrere Filamente umfasst, deren chemische Zusammensetzung die folgenden Bestandteile in den nachstehend definierten, in Gewichtsprozent ausgedrückten Grenzen umfasst:
| | |
|---|---|
| SiO₂ | 40 bis 60 |
| Al₂O₃ | 0 bis 5 |
| CaO | 1 bis 15 |
| MgO | 1 bis 15 |
| BaO | 2 bis 15 |
| SrO | 12 bis 20 |
| ZnO | 0,5 bis 10 |
| Na₂O + K₂O + Li₂O | 0 bis 5 |
| TiO₂ | 3 bis 20 |

2. Glasfaser nach Anspruch 1, der Art, bei welcher der Gehalt an SiO₂ zwischen 48 und 55% beträgt.

3. Glasfaser nach Anspruch 1 oder 2, der Art, bei welcher der Gehalt an CaO zwischen 5 und 6% beträgt.

4. Glasfaser nach einem der vorhergehenden Ansprüche, der Art, bei welcher der Gehalt an MgO zwischen 4 und 7% beträgt.

5. Glasfaser nach einem der vorhergehenden Ansprüche, der Art, bei welcher der Gehalt an BaO zwischen 5 und 8% beträgt.

6. Glasfaser nach einem der vorhergehenden Ansprüche, der Art, bei welcher der Gehalt an SrO zwischen 12 und 16% beträgt.

7. Glasfaser nach einem der vorhergehenden Ansprüche, der Art, bei welcher die Summe des Gehalts an CaO, MgO, BaO und SrO größer oder gleich 23% ist.

8. Glasfaser nach einem der vorhergehenden Ansprüche, der Art, bei welcher der Gehalt an ZnO zwischen 2 und 5 % beträgt.

9. Glasfaser nach einem der vorhergehenden Ansprüche, der Art, bei welcher der Gehalt an TiO₂ zwischen 5 und 10% beträgt.

10. Prothetisches Dentalelement, das aus einem Verbundmaterial besteht, das die Glasfasern, die Gegenstand eines der Ansprüche 1 bis 9 sind, in ein Harz eingebettet, umfasst.

11. Prothetisches Element nach Anspruch 10, **dadurch gekennzeichnet, dass** es sich um Dentalstifte, Interdentalstifte, Brückenverstärkungen oder Vorformen von CFAO handelt.

12. Prothetisches Element nach Anspruch 10, **dadurch gekennzeichnet, dass** die Glasfasern volumenmäßig zwischen 50 und 70% des prothetischen Elements darstellen.
